# EUROPÄISCHE PATENTSCHRIFT

(11) **EP 3 500 445 B1**
(45) Veröffentlichungstag und Bekanntmachung des Hinweises auf die Patenterteilung: **27.01.2021**
(21) Anmeldenummer: 17762050.7
(22) Anmeldetag: 17.07.2017
(51) Int. Cl.: B60G 17/019, B60Q 1/10, G01P 15/08, B60Q 1/12

(54) **HÖHENSTANDMESSVORRICHTUNG FÜR EIN FAHRZEUG**
HEIGHT MEASURING DEVICE FOR A VEHICLE
DISPOSITIF DE MESURE DE HAUTEUR POUR UN VÉHICULE

(30) Priorität: 17.08.2016 DE 102016215418; 05.05.2017 DE 102017207559
(43) Veröffentlichungstag der Anmeldung: 26.06.2019
(73) Patentinhaber: ZF Friedrichshafen AG, 88046 Friedrichshafen (DE)
(72) Erfinder: STRATMANN, Julian, 49324 Melle (DE); MÜNCH, Eckehard, 32257 Bünde (DE); BÄUMER, Florian, 49492 Westerkappeln (DE); FRYE, Hermann, 49086 Osnabrueck (DE); HOLTHEIDE, Josef, 49434 Neuenkirchen (DE); ASSMANN, Henner, 32139 Spenge (DE); HAGEMES, Joerg, 49086 Osnabrueck (DE); KALLASS, Felix, 49084 Osnabrück (DE); KLANK, Michael, 49084 Osnabrück (DE)
(74) Vertreter: ZF Friedrichshafen AG
(86) Internationale Anmeldenummer: PCT/EP2017/067979
(87) Internationale Veröffentlichungsnummer: WO 2018/033321

(56) Entgegenhaltungen:
- WO-A2-2017/076730
- DE-A1- 10 356 402
- DE-A1-102008 052 035
- US-A1- 2007 067 112

## Beschreibung

Die Erfindung betrifft eine Höhenstandmessvorrichtung für ein Fahrzeug, mit einer Sensoranordnung, mittels welcher eine Lage wenigstens eines ein Fahrzeugrad mit einem Fahrzeugaufbau verbindenden und gelenkig mit diesem verbundenen Fahrwerkbauteils relativ zu dem Fahrzeugaufbau charakterisierende Sensorsignale erzeugbar sind, und einer mit der Sensoranordnung verbundenen Auswerteeinrichtung, mittels welcher unter Auswertung der Sensorsignale wenigstens eine einen Höhenstand des Fahrzeugaufbaus charakterisierende Höhenstandinformation bildbar ist, wobei die Sensoranordnung einen oder wenigstens einen relativ zu dem Fahrwerkbauteil ortsfesten Beschleunigungssensor zur Erfassung der auf das Fahrwerkbauteil wirkenden Beschleunigung, mittels welchem wenigstens ein diese Beschleunigung charakterisierendes Sensorsignal erzeugbar ist, und wenigstens einen relativ zu dem Fahrzeugaufbau ortsfesten Referenzsensor zur Erfassung der auf den Fahrzeugaufbau wirkenden Beschleunigung umfasst, mittels welchem wenigstens ein diese Beschleunigung charakterisierendes Sensorsignal erzeugbar ist.

Eine derartige Höhenstandmessvorrichtung ist aus der DE 103 56 402 A1 bekannt.

Fahrwerkbauteile, insbesondere Kugelgelenke, haben unter anderem die Aufgabe, das Fahrgestell eines Fahrzeugs federnd auf dessen Fahrzeugrädern zu lagern. Die Komponenten des Fahrgestells passen sich dabei der Fahrbahnbeschaffenheit und dem jeweiligem Fahrzustand an, sodass dem Fahrzeuginsassen eine hohe Sicherheit und Komfort geboten wird. Eine wichtige Rolle spielen dabei Gelenke und Lenker, welche die Aufgabe der Radaufhängung übernehmen und eine Lenkung ermöglichen.

Bekannt ist, mittels einer externen Höhenstandsensorik, welche den Einfederweg an der Vorderachse und der Hinterachse eines Fahrzeugs erfasst, den Zustand oder die Winkelstellung von Fahrwerkbauteilen zu erfassen. Beispielsweise kann mit einer Höhenstanderfassung eine Leuchtweitenregulierung realisiert werden. Ferner kann durch eine elektrische Auswerteeinrichtung und/oder eine Sensoreinrichtung die Winkelstellung eines Gelenks aufgenommen werden. Durch die Auswertung der dadurch gelieferten Daten kann eine Höhenstanderfassung realisiert werden, die Informationen für eine Leuchtweitenregulierung oder für eine aktive Fahrwerksregelung, wie z.B. Continuous Damping Control (CDC) oder Wankstabilisierung, liefert.

Neben der Lösung, einen Höhenstandsensor über eine Koppelstange zwischen Fahrwerklenker und Aufbau zu platzieren, besteht eine weitere Lösung darin, den Höhenstands über die Winkelstellung eines Kugelzapfens in einem Fahrwerklenker zu erfassen. Dabei misst ein Magnetfeldsensor den Winkel zwischen Kugelzapfen und Gehäuse eines Kugelgelenks, indem der Magnetfeldsensor, befestigt an einem Verschlussdeckel des Gehäuses, das Magnetfeld eines im Kugelzapfen befindlichen Magneten auswertet. Gelenkverbindungen stehen jedoch, verbaut in einem Fahrwerk, unter dem Störeinfluss elektromagnetischer Felder. Diese entstehen insbesondere durch in der Nähe des Magnetfeldsensors angeordnete elektrische Bauteile oder Maschinen, wie z.B. elektrische Leitungen oder Verbraucher, beispielsweise Elektromotoren. Wird ein Magnetfeldsensor, wie z.B. ein Hall-Sensor, eingesetzt, misst dieser sowohl das Magnetfeld des sich im Kugelzapfen befindlichen Magneten als auch das von außen anliegende Störfeld. Das Winkelsignal wird somit verfälscht. Zudem wirken sich gerade bei einer konventionellen Höhenstandsensorik über Hebelübersetzungen, mechanische Komponenten durch Verschleiß und Toleranzen störend auf das Winkelsignal aus. Über die Lebenszeit der Höhenstandsensorik werden diese Einflüsse größer und die Signalgenauigkeit verschlechtert sich weiter.

Ausgehend hiervon liegt der Erfindung die Aufgabe zugrunde, eine Höhenstandmessvorrichtung der eingangs genannten Art derart weiterzubilden, dass die vorgenannten Probleme vermieden werden können.

Diese Aufgabe wird durch eine Höhenstandmessvorrichtung nach Anspruch 1 gelöst. Bevorzugte Weiterbildungen der Höhenstandmessvorrichtung sind in den Unteransprüchen und in der nachfolgenden Beschreibung gegeben.

Die Höhenstandmessvorrichtung für ein Fahrzeug, insbesondere Kraftfahrzeug, weist eine Sensoranordnung, mittels welcher die oder eine Lage eines oder wenigstens eines ein Fahrzeugrad mit einem Fahrzeugaufbau verbindenden und gelenkig mit dem Fahrzeugaufbau verbundenen Fahrwerkbauteils relativ zu dem Fahrzeugaufbau charakterisierende Sensorsignale erzeugbar sind, und eine mit der Sensoranordnung verbundene Auswerteeinrichtung auf, mittels welcher unter Auswertung der Sensorsignale eine oder wenigstens eine den oder einen Höhenstand des Fahrzeugaufbaus charakterisierende Höhenstandinformation bildbar ist, wobei die Sensoranordnung einen oder wenigstens einen relativ zu dem Fahrwerkbauteil ortsfesten Beschleunigungssensor zur Erfassung der auf das Fahrwerkbauteil wirkenden Beschleunigung, mittels welchem wenigstens ein diese Beschleunigung charakterisierendes Sensorsignal erzeugbar ist, und wenigstens einen relativ zu dem Fahrzeugaufbau ortsfesten Referenzsensor zur Erfassung der auf den Fahrzeugaufbau wirkenden Beschleunigung umfasst, mittels welchem wenigstens ein diese Beschleunigung charakterisierendes Sensorsignal erzeugbar ist.

Der eingesetzte Beschleunigungssensor ist unempfindlich gegenüber elektromagnetischen Störfeldern und gegenüber Verschleiß. Die aus dem Stand der Technik bekannten Probleme sind somit vermeidbar.

Bei der Höhenstandmessvorrichtung wird sich zunutze gemacht, dass auf die seismische Masse eines Beschleunigungssensors eine Beschleunigung wirkt. Das von dem Beschleunigungssensor erzeugte Sensorsignal ist - im rein statischen Fall - somit abhängig von dem Winkel, den die Messrichtung oder zumindest eine der Messrichtungen des Beschleunigungssensors mit der Richtung der Erdbeschleunigung einschließt. Da der Beschleunigungssensor ortsfest zum Fahrwerkbauteil ist, ist das von dem Beschleunigungssensor erzeugte Sensorsignal auch abhängig von dem Winkel, den das Fahrwerkbauteil mit der Richtung der Erdbeschleunigung einschließt. Ferner ist - wieder im rein statischen Fall - das von dem Referenzsensor erzeugte Sensorsignal abhängig von dem Winkel, den der Fahrzeugaufbau mit der Richtung der Erdbeschleunigung einschließt.

Bei einer rein statischen Betrachtung (im Stand des Fahrzeugs, d.h. ohne Bewegung des Fahrwerkbauteils sowie ohne Bewegung des Fahrzeugaufbaus) ist das vom Beschleunigungssensor (bzw. Referenzssensor) erzeugte Signal ausschließlich abhängig vom Winkel des Fahrwerkbauteils (bzw. des Fahrzeugaufbaus) gegenüber der Erdbeschleunigung. Der Grund ist, dass in diesem Fall ausschließlich die Erdbeschleunigung auf den jeweiligen Sensor wirkt.

Bei dynamischer Betrachtung (das Fahrzeug bewegt sich, das Fahrwerkbauteil bewegt sich relativ zum Fahrzeugaufbau beispielsweise aufgrund von Ein- oder Ausfederbewegungen) wirkt auf den jeweiligen Sensor neben der Erdbeschleunigung auch die Beschleunigung des Fahrwerkbauteils bzw. Fahrzeugaufbaus selbst.

Erfindungsgemäß lässt sich die Lage des Fahrwerkbauteils relativ zu dem Fahrzeugaufbau sowohl im statischen als auch im dynamischen Fahrzeugzustand ermitteln, wobei die mit der Sensoranordnung verbundene Auswerteeinrichtung die erfassten Sensorsignale auswertet und daraus eine den Höhenstand des Fahrzeugs charakterrisierende Höhenstandinformation bildet.

Bei der Lage des Fahrwerkbauteils relativ zu dem Fahrzeugaufbau handelt es sich um eine Winkellage. Im statischen Fall (Fahrzeug steht) verläuft die erfasste Beschleunigung (=Erdbeschleunigung) am Ort des Referenzsensors und am Ort des Beschleunigungssensors insbesondere in derselben Richtung.

Gemäß einer Ausgestaltung sind dem Fahrzeug und/oder dem Fahrzeugaufbau eine Fahrzeuglängsrichtung, eine Fahrzeugquerrichtung und eine Fahrzeughochrichtung zugeordnet. Diese Richtungen liegen insbesondere nicht in einer gemeinsamen Ebene. Vorzugsweise verlaufen diese Richtungen senkrecht zueinander. Die Fahrzeuglängsrichtung entspricht bevorzugt der gewöhnlichen Fahrtrichtung oder Vorwärtsfahrtrichtung des Fahrzeugs. Eine Fahrzeugachse des Fahrzeugs verläuft bevorzugt in Fahrzeugquerrichtung.

Der Höhenstand ist insbesondere der Abstand zwischen einem definierten Ort des Fahrzeugrads und einem definierten Ort des Fahrzeugaufbaus, insbesondere in Fahrzeughochrichtung und/oder senkrecht zur Radmitte des Fahrzeugrads. Beispielsweise wird der Höhenstand zwischen der unteren Kante des Felgenhorns einer Felge des Fahrzeugrads bis zur unteren Kante eines Radhauses des Fahrzeugaufbaus, insbesondere in Fahrzeughochrichtung und/oder senkrecht zur Radmitte des Fahrzeugrads, gemessen.

Beschleunigungssensoren sind als ein-axiale oder als mehr-axiale, wie z.B. als zweiaxiale oder als drei-axiale Beschleunigungssensoren verfügbar. Dabei weist ein einaxialer Beschleunigungssensor lediglich eine einzige Messrichtung auf. Ein mehraxialer Beschleunigungssensor weist hingegen mehrere unterschiedliche Messrichtungen auf, die insbesondere linear voneinander unabhängig sind. Vorzugsweise sind die Messrichtungen des oder eines mehr-axialen Beschleunigungssensors senkrecht zueinander ausgerichtet. Bevorzugt weist ein zwei-axialer Beschleunigungssensor zwei unterschiedliche Messrichtungen auf. Vorzugsweise sind die Messrichtungen des oder eines zwei-axialen Beschleunigungssensors senkrecht zueinander ausgerichtet. Bevorzugt weist ein drei-axialer Beschleunigungssensor drei unterschiedliche Messrichtungen auf, die insbesondere nicht in derselben Ebene liegen. Vorzugsweise sind die Messrichtungen des oder eines drei-axialen Beschleunigungssensors senkrecht zueinander ausgerichtet.

Der Beschleunigungssensor ist bevorzugt mit dem Fahrwerkbauteil, insbesondere fest und/oder starr, verbunden. Beispielsweise handelt es sich bei dem Beschleunigungssensor um einen ein-axialen oder um einen mehr-axialen, wie z.B. um einen zwei-axialen oder um einen drei-axialen Beschleunigungssensor.

Bei dem Referenzsensor handelt es sich um einen relativ zu dem Fahrzeugaufbau ortsfesten Beschleunigungssensor. Bevorzugt ist der Referenzsensor, insbesondere fest und/oder starr, mit dem Fahrzeugaufbau verbunden. Beispielsweise handelt es sich bei dem Referenzsensor um einen ein-axialen oder um einen mehr-axialen, wie z.B. um einen zwei-axialen oder um einen drei-axialen Beschleunigungssensor.

Der Referenzsensor kann ausschließlich der Höhenstandmessvorrichtung zugeordnet sein. Bevorzugt handelt es sich bei dem Referenzsensor aber um einen oder wenigstens einen bereits im Fahrzeug vorhandenen Sensor. In vielen Fahrzeugen mit Fahrdynamikregelung (ESP) liegen bereits Informationen über Beschleunigungen und/oder Gierraten des Fahrzeugaufbaus in und/oder um alle Raumrichtungen und/oder Fahrzeugachsen vor (z.B. Längsbeschleunigung, Querbeschleunigung, Hochbeschleunigung, Gieren, Nicken, Wanken), sodass diese Informationen zur Verrechnung des Höhenstands und/oder zur Erzeugung des anderen Lagesignals verwendbar sind. Der Referenzsensor kann somit durch einen oder wenigstens einen, insbesondere bereits im Fahrzeug existierenden, Fahrzeugaufbausensor (Aufbausensorik) gebildet sein, der z.B. einem ESP-Steuergerät, einem CDC-Steuergerät und/oder einem Airbag-Steuergerät zugeordnet ist. Somit wird zur Realisierung der Höhenstandmessvorrichtung zusätzlich lediglich der zum Fahrwerkbauteil ortsfeste Beschleunigungssensor benötigt, sodass die Gesamtanzahl der im Fahrzeug verbauten Sensoren gering gehalten werden kann. Ferner kann der zum Fahrwerkbauteil ortsfeste Beschleunigungssensor einen Radbeschleunigungssensor ersetzen. Auch hierdurch kann die Gesamtanzahl der im Fahrzeug verbauten Sensoren gering gehalten werden.

Gemäß einer Ausgestaltung ist das Fahrwerkbauteil schwenkbar mit dem Fahrzeugaufbau verbunden. Insbesondere ist das Fahrwerkbauteil relativ zu dem Fahrzeugaufbau um wenigstens eine Schwenkachse schwenkbar. Bevorzugt weist das Fahrwerkbauteil ein oder wenigstens ein fahrzeugaufbauseitiges Gelenk auf, welches z.B. ein Schwenklager und/oder ein Gummilager ist. Vorzugsweise ist das Fahrwerkbauteil durch das fahrzeugaufbauseitige Gelenk schwenkbar und/oder gelenkig mit dem Fahrzeugaufbau verbunden. Bevorzugt weist das Fahrwerkbauteil ein oder wenigstens ein fahrzeugradseitiges Gelenk auf, welches z.B. ein Kugelgelenk ist. Vorzugsweise ist das Fahrwerkbauteil durch das fahrzeugradseitige Gelenk unmittelbar oder mittelbar gelenkig mit dem Fahrzeugrad verbunden. Bei dem Fahrwerkbauteil handelt es sich insbesondere um einen Fahrwerklenker, beispielsweise um einen Querlenker. Bevorzugt ist das Fahrwerkbauteil mit einem Radträger, insbesondere gelenkig, verbunden, an dem vorzugsweise das Fahrzeugrad drehbar gelagert ist. Bevorzugt ist das Fahrwerkbauteil mit dem Radträger durch das fahrzeugradseitige Gelenk verbunden.

Die Neigung des Fahrwerkbauteils ist relativ zur Richtung der erfassten Beschleunigung durch wenigstens einen Fahrwerkbauteil-Neigungswinkel charakterisiert, der insbesondere mittels der Auswerteeinrichtung bestimmbar ist. Die Neigung des Fahrzeugaufbaus ist relativ zur Richtung der erfassten Beschleunigung durch wenigstens einen Fahrzeugaufbau-Neigungswinkel charakterisiert, der insbesondere mittels der Auswerteeinrichtung bestimmbar ist. Mittels der Auswerteeinrichtung ist durch Vergleich von Fahrwerkbauteil-Neigungswinkel und Fahrzeugaufbau-Neigungswinkel ein charakterisierendes Neigungswinkel-Differenzsignal bestimmbar. Durch das Neigungswinkel-Differenzsignal ist die Lage des Fahrwerkbauteils relativ zu dem Fahrzeugaufbau charakterisiert. Somit lässt sich die Auslenkung des Fahrwerkbauteils relativ zu dem Fahrzeugaufbau bestimmen. Bevorzugt ist mittels der Auswerteeinrichtung unter Verwendung des Neigungswinkel-Differenzsignals die Höhenstandinformation bildbar.

Vorteilhaft ist weiterhin dem Fahrzeug, insbesondere dem Fahrzeugaufbau, wenigstens ein zusätzliches Sensorsignal, vorzugsweise eines Drehratensensors oder eines weiteren Beschleunigungssensors zugeordnet, wobei die Auswerteeinrichtung zur Bildung der Höhenstandinformation neben dem Neigungswinkel-Differenzsignal ein vom Drehratensensor erzeugtes Drehratensignal berücksichtigt, um die Genauigkeit der Höhenstandinformation zu erhöhen.

Die Auswerteeinrichtung umfasst bevorzugt eine elektronische Recheneinheit und/oder eine elektronische Speichereinheit. Bei der Recheneinheit handelt es sich z.B. um einen Analogrechner oder um einen Digitalrechner. Beispielsweise ist die Recheneinheit durch einen Mikroprozessor oder Mikrocontroller gebildet. Die Speichereinheit umfasst z.B. einen Speicher mit wahlfreiem Zugriff (RAM) und/oder einen Festwertspeicher (ROM) und/oder einen anderen elektronischen Speicher. Die Höhenstandinformation ist z.B. in der Speichereinheit hinterlegt.

Bevorzugt ist mittels der Auswerteeinrichtung ein die Höhenstandinformation charakterisierendes Höhenstandsignal erzeugbar und/oder abgebbar.

Gemäß einer Weiterbildung ist mittels der Sensoranordnung die oder eine Lage eines oder wenigstens eines ein zusätzliches Fahrzeugrad mit dem Fahrzeugaufbau verbindenden und gelenkig mit dem Fahrzeugaufbau verbundenen zusätzlichen Fahrwerkbauteils relativ zu dem Fahrzeugaufbau erfassbar, wobei mittels der Sensoranordnung diese Lage charakterisierende Lagesignale erzeugbar sind. Eines oder wenigstens eines dieser Lagesignale ist dabei insbesondere das durch den Referenzsensor erzeugte andere Lagesignal. Bevorzugt umfasst die Sensoranordnung einen oder wenigstens einen relativ zu dem zusätzlichen Fahrwerkbauteil ortsfesten zusätzlichen Beschleunigungssensor, mittels welchem die oder eine Neigung des zusätzlichen Fahrwerkbauteils relativ zur Richtung der erfassten Beschleunigung erfassbar und ein oder wenigstens ein diese Neigung charakterisierendes Sensorsignal erzeugbar ist, welches eines oder wenigstens eines der Lagesignale oder ein oder wenigstens ein zusätzliches der Lagesignale bildet. Vorzugsweise sind mittels der Auswerteeinrichtung unter Auswertung der Lagesignale mehrere den oder einen Höhenstand des Fahrzeugaufbaus charakterisierende Höhenstandinformationen bildbar. Vorteilhaft sind mittels der Auswerteeinrichtung die Höhenstandinformationen charakterisierende Höhenstandsignale erzeugbar und/oder abgebbar. Die Fahrwerkbauteile sind insbesondere unterschiedlichen Fahrzeugachsen zugeordnet.

Gemäß einer Ausgestaltung der Höhenstandmessvorrichtung ist die Auswerteeinrichtung mit einer Leuchtweitenregulierungseinrichtung verbunden, mittels welcher unter Auswertung des oder der Höhenstandsignale eine Leuchtweitenregulierung durchführbar ist. Bevorzugt ist die Höhenstandmessvorrichtung zur Leuchtweitenregulierung des oder eines Fahrzeugs verwendbar.

Gemäß einer Weiterbildung ist die Auswerteeinrichtung mit einer aktiven Fahrwerksregelungseinrichtung verbunden, mittels welcher unter Auswertung des oder der Höhenstandsignale eine aktive Fahrwerksregelung durchführbar ist. Bevorzugt ist die Höhenstandmessvorrichtung zur aktiven Fahrwerksregelung des oder eines Fahrzeugs verwendbar.

Gemäß einer Ausgestaltung sind ergänzende Sensoren vorgesehen, durch welche ergänzende Sensorsignale erzeugbar sind, die beispielsweise eine Drehrate des Fahrwerkbauteils und/oder des Fahrzeugaufbaus charakterisieren. Diese ergänzenden Sensorsignale sind z.B. bei der Bildung der Höhenstandinformation zur Korrektur von Ungenauigkeiten verwendbar, die z.B. auf dynamische Beschleunigungsvorgänge, wie z.B. aus Fahrwerksanregungen, zurückzuführen sind.

Vorteilhaft wird durch die Höhenstandmessvorrichtung einerseits der Einfluss von äußeren Störmagnetfeldern reduziert oder eliminiert und andererseits ein robustes System geschaffen, welches eine geringe Anzahl an Bauteilen aufweist und unempfindlich gegenüber Verschleiß ist. Dies wird durch die Verwendung von Beschleunigungssensoren, wie z.B. ein-, zwei- oder drei-axialer, vorzugsweise zwei- oder drei-axialer, Beschleunigungssensoren, an beispielsweise einem Fahrwerklenker und dem Fahrzeugaufbau erreicht. Da während der Fahrt die Erdbeschleunigung in gleichem Maße auf die Beschleunigungssensoren einwirkt, die Winkelstellung von Fahrwerklenker und Fahrzeugaufbau sich jedoch aufgrund der Fahrbahnbeschaffenheit, der Ein- und Ausfederbewegungen des Fahrzeugs sowie von Fahrdynamikzuständen unterscheidet, kann aus der Differenz der Winkelstellungen insbesondere der Winkel zwischen Fahrwerklenker und Fahrzeugaufbau bestimmt werden. Aus diesem Winkel kann dann die Information über den Höhenstand, also insbesondere den Ein - bzw. Ausfederweg des Reifens zur Fahrzeugnulllage, abgeleitet und/oder berechnet werden.

Die Höhenstandsmessvorrichtung ist vorteilhaft betreibbar, aus dem Neigungswinkel-Differenzsignal und der erfassten auf das Fahrwerkbauteil wirkenden Beschleunigung eine Information abzuleiten, welche die Beschleunigung des Rades beschreibt.

Die Erfindung wird nachfolgend anhand einer bevorzugten Ausführungsform unter Bezugnahme auf die Zeichnung beschrieben. In der Zeichnung zeigen:
Fig. 1 eine schematische Ansicht einer Fahrzeugradaufhängung mit einer Höhenstandmessvorrichtung gemäß einer Ausführungsform,
Fig. 2 eine Veranschaulichung des Höhenstands des aus Fig. 1 ersichtlichen Fahrzeugaufbaus,
Fig. 3 eine schematische Darstellung der Höhenstandmessvorrichtung und
Fig. 4 eine schematische Veranschaulichung des Messprinzips zur Bestimmung des Höhenstands.

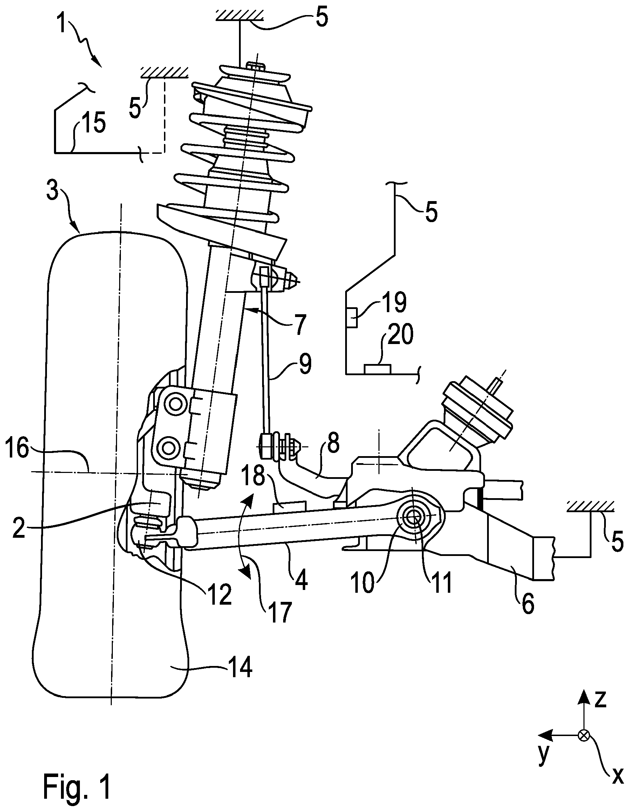

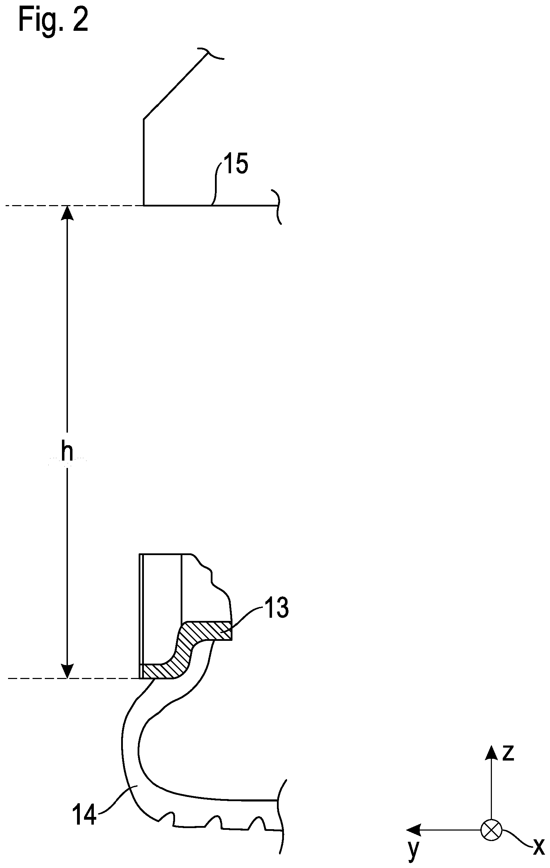

Aus Fig. 1 ist eine Radaufhängung 1 eines Fahrzeugs ersichtlich, die ein an einem Radträger 2 drehbar gelagertes Fahrzeugrad 3 und einen Fahrwerklenker 4 in Form eines Querlenkers umfasst, mittels welchem der Radträger 2 mit einem an einem Fahrzeugaufbau 5 befestigten Hilfsrahmen 6 verbunden ist, der dem Fahrzeugaufbau 5 zugerechnet wird. Die Radaufhängung 1 umfasst ferner ein Federbein 7, mittels welchem der Radträger 2 zusätzlich mit dem Fahrzeugaufbau 5 verbunden ist. Am Hilfsrahmen 6 ist ein Wankstabilisator 8 in Form einer Drehstabfeder gelagert, dessen eines Ende über eine Pendelstütze 9 mit dem Federbein 7 verbunden ist. Der Fahrwerklenker 4 ist an einem Ende mittels eines Gummilagers 10 um eine Schwenkachse 11 schwenkbar an dem Hilfsrahmen 6 gelagert und an einem anderen Ende mittels eines Kugelgelenks 12 an dem Radträger 2 gelagert. Das Fahrzeugrad 3 umfasst eine Felge 13 (siehe Fig. 2) und einen Reifen 14, der auf der Felge 13 sitzt. Ferner umfasst der Fahrzeugaufbau 5 ein Radhaus 15, in dem das Fahrzeugrad 3 angeordnet ist. Ergänzend ist ein Koordinatensystem x, y und z dargestellt, wobei die in die Blattebene hinein verlaufende x-Achse eine Fahrzeuglängsrichtung, die y-Achse eine Fahrzeugquerrichtung und die z-Achse eine Fahrzeughochrichtung repräsentiert. Die Schwenkachse 11 verläuft in oder näherungsweise in Fahrzeuglängsrichtung x. Der Fahrwerklenker 4 ist somit relativ zum Hilfsrahmen 6 und/oder zum Fahrzeugaufbau 5 in Richtung des Pfeils 17 um die Schwenkachse 11 schwenkbar.

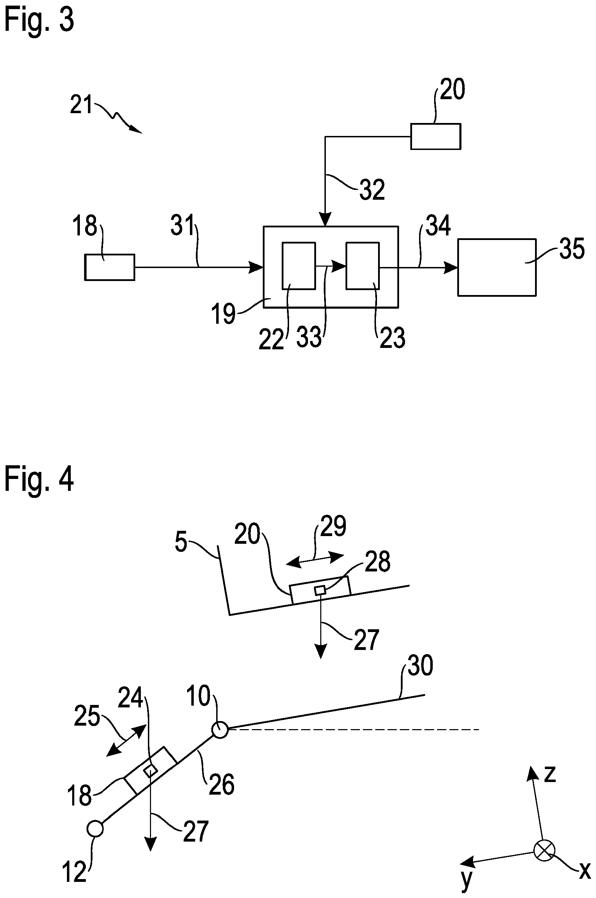

Aus Fig. 2 ist in schematischer Darstellung ein Teil der Felge 13 und ein Teil des Radhauses 15 gezeigt, wobei ein Höhenstand h eingezeichnet ist, der den Abstand des Fahrzeugrads 3 zum Fahrzeugaufbau 5 in oder näherungsweise in Fahrzeughochrichtung z beschreibt. Der Höhenstand h wird zwischen einem definierten Ort des Fahrzeugrads 3 und einem definierten Ort des Fahrzeugaufbaus 5 gemessen. Beispielsweise wird der Höhenstand zwischen der unteren Kante des Felgenhorns der Felge 13 bis zur unteren Kante des Radhauses 15, insbesondere in Fahrzeughochrichtung z und/oder senkrecht zur Radmitte 16 des Fahrzeugrads 3, gemessen. An dem Fahrwerklenker 4 ist ein Beschleunigungssensor 18 befestigt, der elektrisch mit einer Auswerteeinrichtung 19 verbunden ist, die vorzugsweise am Fahrzeugaufbau 5 befestigt ist. Ferner ist am Fahrzeugaufbau 5 ein als Beschleunigungssensor ausgebildeter Referenzsensor 20 befestigt, der elektrisch mit der Auswerteeinrichtung 19 verbunden ist. Der Beschleunigungssensor 18, der Referenzsensor 20 und die Auswerteeinrichtung 19 sind Teil einer in Fig. 3 schematisch dargestellten Höhenstandmessvorrichtung 21 gemäß einer Ausführungsform. Die Auswerteeinrichtung 19 umfasst ferner einen Mikrocontroller 22 und eine elektronische Speichereinheit 23.

Aus Fig. 4 ist eine schematische Veranschaulichung des Messprinzips dargestellt. Der Beschleunigungssensor 18 weist eine federnd aufgehängte seismische Masse 24 auf, die gegen Federkraft aus einer Ruhelage heraus in einer Messrichtung 25 bewegbar ist. Die Messrichtung 25 verläuft dabei parallel zu einer dem Fahrwerklenker 4 zugeordneten Fahrwerklenkerachse 26, die senkrecht zur Schwenksachse 11 verläuft. Insbesondere verläuft die Fahrwerklenkerachse 26 durch die kinematischen Lagermittelpunkte von Gummilager 10 und Kugelgelenk 12. Ist die Messrichtung 25 nicht senkrecht zur Richtung der Erdbeschleunigung 27 ausgerichtet, so wird die seismische Masse 24 aufgrund der Schwerkraft aus ihrer Ruhelage ausgelenkt, was mittels des Beschleunigungssensors 18 erfassbar ist. Somit ist ein Neigungswinkel bestimmbar, den die Messrichtung 25 mit der Richtung der Erdbeschleunigung 27 einschließt.

Ferner weist der Referenzsensor 20 eine federnd aufgehängte seismische Masse 28 auf, die gegen Federkraft aus einer Ruhelage heraus in einer Messrichtung 29 bewegbar ist. Die Messrichtung 29 verläuft dabei parallel zu einer dem Fahrzeugaufbau 5 zugeordneten Referenzachse 30, die senkrecht zur Schwenkachse 11 verläuft. Insbesondere verläuft die Referenzachse 30 in Fahrzeugquerrichtung y und/oder ist parallel zu einer durch die Fahrzeuglängsrichtung x und die Fahrzeugquerrichtung y aufgespannten Ebene. Ist die Messrichtung 29 nicht senkrecht zur Richtung der Erdbeschleunigung 27 ausgerichtet, so wird die seismische Masse 28 aufgrund der Schwerkraft aus ihrer Ruhelage ausgelenkt, was mittels des Referenzsensors 20 erfassbar ist. Somit ist ein Neigungswinkel bestimmbar, den die Messrichtung 29 mit der Richtung der Erdbeschleunigung 27 einschließt. Wird die Differenz aus den Neigungswinkeln gebildet, so ergibt sich der zwischen den Messrichtungen 25 und 29 eingeschlossene Winkel, der den zwischen dem Fahrwerklenker 4 und dem Fahrzeugaufbau 5 eingeschlossenen Winkel charakterisiert. Somit liegt eine Information über die Lage des Fahrwerklenkers 4 relativ zu dem Fahrzeugaufbau 5 vor, aus welcher der Höhenstand h berechenbar ist. Die Auswerteeinrichtung 19 berechnet somit, insbesondere mittels des Mikrocontrollers 22, aus einem von dem Beschleunigungssensor 18 erzeugten Sensorsignal 31 und einem von dem Referenzsensor 20 erzeugten Sensorsignal 32 wenigstens eine den zwischen dem Fahrwerklenker 4 und dem Fahrzeugaufbau 5 eingeschlossenen Winkel charakterisierende Winkelinformation und legt diese insbesondere in der Speichereinheit 23 ab. Ferner berechnet die Auswerteeinrichtung 19 aus der Winkelinformation, insbesondere mittels des Mikrocontrollers 22, eine den Höhenstand h charakterisierende Höhenstandinformation 33 und legt diese in der Speichereinheit 23 ab. Alternativ berechnet die Auswerteeinrichtung 19, insbesondere mittels des Mikrocontrollers 22, aus den Sensorsignalen 31 und 32, vorzugsweise direkt, die oder eine den Höhenstand h charakterisierende Höhenstandinformation 33 und legt diese in der Speichereinheit 23 ab. Ferner wird mittels der Auswerteeinrichtung 19 ein die Höhenstandinformation 33 charakterisierendes Höhenstandsignal 34 erzeugt und an eine Leuchtweitenregulierungseinrichtung 35 abgegeben, mittels welcher unter Auswertung des Höhenstandsignals 34 eine Leuchtweitenregulierung durchführbar ist. Alternativ oder ergänzend zu der Leuchtweitenregulierungseinrichtung 35 kann das Höhenstandsignal 34 aber auch an eine andere Steuereinrichtung des Fahrzeugs abgegeben werden. Beispielsweise wird das Höhenstandsignal 34 an eine aktive Fahrwerksregelungseinrichtung abgegeben, mittels welcher unter Auswertung des Höhenstandsignals 34 eine aktive Fahrwerksregelung durchführbar ist.

### Bezugszeichen

- 1: Radaufhängung
- 2: Radträger
- 3: Fahrzeugrad
- 4: Fahrwerklenker
- 5: Fahrzeugaufbau
- 6: Hilfsrahmen
- 7: Federbein
- 8: Wankstabilisator
- 9: Pendelstütze
- 10: Gummilager
- 11: Schwenkachse
- 12: Kugelgelenk
- 13: Felge des Fahrzeugrads
- 14: Reifen des Fahrzeugrads
- 15: Radhaus des Fahrzeugaufbaus
- 16: Radmitte des Fahrzeugrads
- 17: Schwenkrichtung des Fahrwerklenkers
- 18: Beschleunigungssensor
- 19: Auswerteeinrichtung
- 20: Referenzsensor
- 21: Höhenstandmessvorrichtung
- 22: Mikrocontroller
- 23: Speichereinheit
- 24: seismische Masse des Beschleunigungssensors
- 25: Messrichtung des Beschleunigungssensors
- 26: Fahrwerklenkerachse
- 27: Richtung der Erdbeschleunigung
- 28: seismische Masse des Referenzsensors
- 29: Messrichtung des Referenzsensors
- 30: Referenzachse
- 31: Sensorsignal des Beschleunigungssensors
- 32: Sensorsignal des Referenzsensors
- 33: Höhenstandinformation
- 34: Höhenstandsignal
- 35: Leuchtweitenregulierungseinrichtung
- h: Höhenstand
- x: Fahrzeuglängsrichtung
- y: Fahrzeugquerrichtung
- z: Fahrzeughochrichtung

## Patentansprüche

1. Höhenstandmessvorrichtung für ein Fahrzeug, mit einer Sensoranordnung (18, 20), mittels welcher eine Lage wenigstens eines ein Fahrzeugrad (3) mit einem Fahrzeugaufbau (5) verbindenden und gelenkig mit diesem verbundenen Fahrwerkbauteils (4) relativ zu dem Fahrzeugaufbau (5) charakterisierende Sensorsignale (31, 32) erzeugbar sind, und einer mit der Sensoranordnung (18, 20) verbundenen Auswerteeinrichtung (19), mittels welcher unter Auswertung der Sensorsignale (31, 32) wenigstens eine einen Höhenstand (h) des Fahrzeugaufbaus (5) charakterisierende Höhenstandinformation (33) bildbar ist, wobei die Sensoranordnung (18, 20) wenigstens einen relativ zu dem Fahrwerkbauteil (4) ortsfesten Beschleunigungssensor (18) zur Erfassung der auf das Fahrwerkbauteil (4) wirkenden Beschleunigung, mittels welchem wenigstens ein diese Beschleunigung charakterisierendes Sensorsignal (31) erzeugbar ist, und wenigstens einen relativ zu dem Fahrzeugaufbau (5) ortsfesten Referenzsensor (20) zur Erfassung der auf den Fahrzeugaufbau (5) wirkenden Beschleunigung umfasst, mittels welchem wenigstens ein diese Beschleunigung charakterisierendes Sensorsignal (32) erzeugbar ist, **dadurch gekennzeichnet, dass** die Neigung des Fahrwerkbauteils (4) relativ zur Richtung der erfassten Beschleunigung durch wenigstens einen Fahrwerkbauteil-Neigungswinkel charakterisiert ist und die Neigung des Fahrzeugaufbaus (5) relativ zur Richtung der erfassten Beschleunigung durch wenigstens einen Fahrzeugaufbau-Neigungswinkel charakterisiert ist, wobei mittels der Auswerteeinrichtung (19) durch Vergleich von Fahrwerkbauteil-Neigungswinkel und Fahrzeugaufbau-Neigungswinkel ein charakterisierendes Neigungswinkel-Differenzsignal bestimmbar ist, durch welches die Lage des Fahrwerkbauteils (4) relativ zu dem Fahrzeugaufbau (5) charakterisiert ist.

2. Höhenstandmessvorrichtung nach Anspruch 1, **dadurch gekennzeichnet, dass** das Fahrwerkbauteil (4) schwenkbar mit dem Fahrzeugaufbau (5) verbunden und relativ zu diesem um wenigstens eine Schwenkachse (11) schwenkbar ist.

3. Höhenstandmessvorrichtung nach Anspruch 1 oder 2, **dadurch gekennzeichnet, dass** mittels der Auswerteeinrichtung (19) unter Verwendung des Neigungswinkel-Differenzsignals die Höhenstandinformation (33) bildbar ist.

4. Höhenstandmessvorrichtung nach Anspruch 3, **dadurch gekennzeichnet, dass** dem Fahrzeug, insbesondere dem Fahrzeugaufbau (5), wenigstens ein zusätzliches Sensorsignal eines Drehratensensors zugeordnet ist, wobei die Auswerteeinrichtung (19) zur Bildung der Höhenstandinformation (33) neben dem Neigungswinkel-Differenzsignal ein vom Drehratensensor erzeugtes Drehratensignal berücksichtigt, um die Genauigkeit der Höhenstandinformation (33) zu erhöhen.

5. Höhenstandmessvorrichtung nach einem der vorangehenden Ansprüche, **dadurch gekennzeichnet, dass** mittels der Auswerteeinrichtung (19) ein die Höhenstandinformation (33) charakterisierendes Höhenstandsignal (34) erzeugbar ist.

6. Höhenstandmessvorrichtung nach Anspruch 5, **dadurch gekennzeichnet, dass** die Auswerteeinrichtung (19) mit einer Leuchtweitenregulierungseinrichtung (35) verbunden ist, mittels welcher unter Auswertung des Höhenstandsignals (34) eine Leuchtweitenregulierung durchführbar ist.

7. Höhenstandmessvorrichtung nach einem der vorhergehenden Ansprüche, **dadurch gekennzeichnet, dass** die Auswerteeinrichtung (19) betreibbar ist, aus dem Neigungswinkel-Differenzsignal und der erfassten auf das Fahrwerkbauteil wirkenden Beschleunigung eine Information abzuleiten, welche die Beschleunigung des Rades beschreibt.

## Claims

1. Height measuring device for a vehicle, with a sensor assembly (18, 20), by means of which sensor signals (31, 32) that characterize a position of at least one chassis component (4) relative to the vehicle structure (5) can be generated, said chassis component connecting a vehicle wheel (3) to a vehicle structure (5) and being connected to the latter in an articulated manner, and with an evaluating device (19), which is connected to the sensor assembly (18, 20) and by means of which at least one item of height information (33) that characterizes a height (h) of the vehicle structure (5) by evaluating the sensor signals (31, 32) can be formed, wherein the sensor assembly (18, 20) comprises at least one acceleration sensor (18), which is stationary relative to the chassis component (4), is intended for detecting the acceleration acting on the chassis component (4) and by means of which at least one sensor signal (31) that characterizes this acceleration can be generated, and at least one reference sensor (20), which is stationary relative to the vehicle structure (5), is intended for detecting the acceleration acting on the vehicle structure (5) and by means of which at least one sensor signal (32) that characterizes this acceleration can be generated, **characterized in that** the inclination of the chassis component (4) relative to the direction of the detected acceleration is **characterized by** at least one chassis-component inclination angle and the inclination of the vehicle structure (5) relative to the direction of the detected acceleration is **characterized by** at least one vehicle-structure inclination angle, wherein, by comparison of the chassis-component inclination angle and the vehicle-structure inclination angle, a characterizing inclination-angle differential signal can be determined by means of the evaluating device (19), said signal characterizing the position of the chassis component (4) relative to the vehicle structure (5).

2. Height measuring device according to Claim 1, **characterized in that** the chassis component (4) is swivel-connected to the vehicle structure (5) and can be swivelled relative thereto about at least one swivel axis (11) .

3. Height measuring device according to Claim 1 or 2, **characterized in that** the height information (33) can be formed by means of the evaluating device (19) by using the inclination-angle differential signal.

4. Height measuring device according to Claim 3, **characterized in that** at least one additional sensor signal of a rate-of-rotation sensor is assigned to the vehicle, in particular to the vehicle structure (5), wherein, in addition to the inclination-angle differential signal, the evaluating device (19) takes into account a rate-of-rotation signal, generated by the rate-of-rotation sensor, for forming the height information (33), in order to increase the accuracy of the height information (33).

5. Height measuring device according to one of the preceding claims, **characterized in that** a height signal (34) that characterizes the height information (33) can be generated by means of the evaluating device (19).

6. Height measuring device according to Claim 5, **characterized in that** the evaluating device (19) is connected to a headlamp levelling device (35), by means of which headlamp levelling can be carried out by evaluating the height signal (34).

7. Height measuring device according to one of the preceding claims, **characterized in that** the evaluating device (19) can be operated so as to derive an item of information that describes the acceleration of the wheel from the inclination-angle differential signal and the detected acceleration acting on the chassis component.

## Revendications

1. Dispositif de mesure de hauteur d'un véhicule, ledit dispositif comprenant un ensemble de capteurs (18, 20) permettant de générer des signaux de capteur (31, 32) caractérisant la position d'au moins un composant de mécanisme de roulement (4), qui relie une roue de véhicule (3) à une carrosserie de véhicule (5) et qui est relié de manière articulée à celle-ci, par rapport à la carrosserie de véhicule (5), et un moyen d'évaluation (19) qui est relié à l'ensemble de capteurs (18, 20) et qui permet de former, en évaluant les signaux de capteur (31, 32), au moins une informations de hauteur (33) caractérisant la hauteur (h) de la carrosserie de véhicule (5), l'ensemble de capteurs (18, 20) comprenant au moins un capteur d'accélération (18), qui est fixe par rapport au composant de mécanisme de roulement (4) et destiné à détecter l'accélération agissant sur le composant de mécanisme de roulement (4) et qui permet de générer au moins un signal de capteur (31) caractérisant cette accélération, et au moins un capteur de référence (20) qui est fixe par rapport à la carrosserie de véhicule (5) et destiné à détecter l'accélération agissant sur la carrosserie de véhicule (5) et qui permet de générer au moins un signal de capteur (32) caractérisant cette accélération, **caractérisé en ce que** l'inclinaison du composant de mécanisme de roulement (4) par rapport à la direction de l'accélération détectée est **caractérisée par** au moins un angle d'inclinaison de composant de mécanisme de roulement et l'inclinaison de la carrosserie de véhicule (5) par rapport à la direction de l'accélération détectée est **caractérisée par** au moins un angle d'inclinaison de la carrosserie de véhicule, le moyen d'évaluation (19) déterminant, en comparant l'angle d'inclinaison de composant de mécanisme de roulement et l'angle d'inclinaison de carrosserie de véhicule, un signal de différence d'angle d'inclinaison caractéristique qui caractérise la position du composant de mécanisme de roulement (4) par rapport à la carrosserie de véhicule (5).

2. Dispositif de mesure de hauteur selon la revendication 1, **caractérisé en ce que** le composant de mécanisme de roulement (4) est relié de manière pivotante à la carrosserie de véhicule (5) et peut pivoter par rapport à celle-ci sur au moins un axe de pivotement (11).

3. Dispositif de mesure de hauteur selon la revendication 1 ou 2, **caractérisé en ce que** le moyen d'évaluation (19) permet de former l'information de hauteur (33) en utilisant le signal de différence d'angle d'inclinaison.

4. Dispositif de mesure de hauteur selon la revendication 3, **caractérisé en ce que** le véhicule, en particulier la carrosserie de véhicule (5), est associé à au moins un signal de capteur supplémentaire d'un capteur de vitesse de rotation, le moyen d'évaluation (19) prenant en compte, pour former l'information de hauteur (33), en plus du signal de différence d'angle d'inclinaison, un signal de vitesse de rotation généré par le capteur de vitesse de rotation afin d'augmenter la précision de l'information de hauteur (33).

5. Dispositif de mesure de hauteur selon l'une des revendications précédentes, **caractérisé en ce que** le moyen d'évaluation (19) peut générer un signal de hauteur (34) caractérisant l'information de hauteur (33) .

6. Dispositif de mesure de hauteur selon la revendication 5, **caractérisé en ce que** le moyen d'évaluation (19) est relié à un moyen de régulation de portée de phare (35) permettant d'effectuer une régulation de portée de phare en évaluant le signal de hauteur (34).

7. Dispositif de mesure de hauteur selon l'une des revendications précédentes, **caractérisé en ce que** le moyen d'évaluation (19) peut être employé pour dériver une information, qui décrit l'accélération de la roue, à partir du signal de différence d'angle d'inclinaison et de l'accélération détectée agissant sur le composant de mécanisme de roulement.
